# EUROPÄISCHE PATENTANMELDUNG

(11) **EP 2 228 921 A1**
(43) Veröffentlichungstag der Anmeldung: **15.09.2010**
(21) Anmeldenummer: 10152297.7
(22) Anmeldetag: 01.02.2010
(51) Int. Cl.: H04B 10/10

(54) **Übertragungseinheit zur Übertragung von Daten in einem optischen Datennetzwerk sowie Verfahren zum Ausrichten einer solchen Übertragungseinheit**

(30) Priorität: 10.03.2009 DE 102009012518
(71) Anmelder: Sinitec Vertriebsgesellschaft mbH, 80807 München (DE)
(72) Erfinder: Lück, Thomas, 86179, Augsburg (DE)
(74) Vertreter: Epping, Wilhelm

(57) **Zusammenfassung**

Die Erfindung betrifft eine Übertragungseinheit (1) zur Übertragung von Daten in einem optischen Datennetzwerk, wobei Daten kabellos über moduliertes sichtbares Licht einer Sendediode (12, 22) an einen Empfänger (13, 23) übertragbar sind. Die Übertragungseinheit (1) weist hierzu eine Sendediode (12) zum Versenden von Daten und einen Empfänger (13) zum Empfangen von Daten einer weiteren Übertragungseinheit (2) sowie eine Datenschnittstelle (6) zum Anschluss an ein Computersystem (3) auf. Erfindungsgemäß ist die Übertragungseinheit (1) derart eingerichtet, dass die wenigstens eine Sendediode (12) und der wenigstens eine Empfänger (13) in Abhängigkeit von einer durch den Empfänger (13) gemessenen Signalstärke auf die weitere Übertragungseinheit (2) ausrichtbar sind.

Ferner wird ein Verfahren zum Ausrichten einer solchen Übertragungseinheit (1) beschrieben.

## Beschreibung

Übertragungseinheit zur Übertragung von Daten in einem optischen Datennetzwerk sowie Verfahren zum Ausrichten einer solchen Übertragungseinheit

Die Erfindung betrifft eine Übertragungseinheit zur Übertragung von Daten in einem optischen Datennetzwerk, wobei die Daten kabellos über moduliertes sichtbares Licht einer Sendediode an einen Empfänger übertragbar sind und wobei die Übertragungseinheit wenigstens einen Empfänger zum Empfangen von Daten sowie eine Datenschnittstelle zum Anschluss an ein Computersystem aufweist.

Ferner betrifft die Erfindung ein Verfahren zum Ausrichten einer solchen Übertragungseinheit.

Es existieren bereits Forschungsansätze, ein kabelloses Datennetzwerk zum Austausch von Informationen und Daten zwischen mehreren Computern nicht, wie bereits üblich, über Funkwellen, sondern über das sichtbare Licht aufzubauen. Dabei werden Informationen durch moduliertes sichtbares Licht einer Licht emittierenden Diode (LED) codiert. So können einzelne Datenbits beispielsweise durch hochfrequente Hell-Dunkel-Wechsel des von einer LED ausgestrahlten Lichts übertragen werden. Aufgrund der hohen Frequenz der Modulation ist diese für das menschliche Auge nicht wahrnehmbar. Jedoch ist es möglich, die modulierten Signale zum Beispiel über Photodioden oder Phototransistoren zu empfangen, wobei die übertragenen Lichtinformationen in entsprechende elektrische Signale umgewandelt und weiterverarbeitet werden können.

Eine Übertragungseinheit zur Übertragung von Informationen und Daten in einem solchen optischen Datennetzwerk enthält wenigstens einen photosensitiven Empfänger zum Empfang von Signalen einer weiteren Übertragungseinheit und gegebenenfalls wenigstens eine LED-Sendediode zum Versenden von Daten über moduliertes Licht. Die empfangenen Daten können schließlich weiterverarbeitet und decodiert werden und über eine Datenschnittstelle an einen angeschlossenen Computer weitergegeben werden. So ist es möglich, dass zwei oder mehrere Computer in einem solchen optischen Datennetzwerk kommunizieren.

Mögliche Anwendungsgebiete bestehen in der Vernetzung elektronischer Geräte und Computersysteme über Lichtsignale der Deckenbeleuchtung in Büroräumen oder in der Informationsweitergabe in Lichtsignalen von Warnleuchten, beispielsweise von LED-Rücklichtscheinwerfern in Automobilen. Dieser Stand der Technik findet sich unter http://smartlighting.bu.edu.

Bisher wird eine vorgenannte Datenverbindung zwischen zwei Computern über zwei prototypische Übertragungseinheiten hergestellt, deren Position im Raum bekannt ist und die mit einer Halterung auf einer ebenen Fläche zueinander ausgerichtet werden. Diese prototypischen Übertragungseinheiten besitzen jedoch den Nachteil, dass eine Ausrichtung zeitraubend und mühsam durchgeführt werden muss. Eine gute Verbindungsqualität ist zudem nur mit Kenntnis der Positionen der Übertragungseinheiten im Raum erzielbar.

Zur einfachen Anwendung in einem optischen Datennetzwerk zwischen mobilen Geräten und LEDs in einer Deckenbeleuchtung als Zugriffsstellen (Access Points) zum Aufbau einer Datenverbindung sind diese Übertragungseinrichtungen daher ungeeignet.

Der Erfindung liegt deshalb die Aufgabe zugrunde, eine Übertragungseinheit sowie ein Verfahren zur Ausrichtung einer Übertragungseinheit der eingangs genannten Art zu beschreiben, wodurch eine einfachere Ausrichtung einer Übertragungseinheit und ein verbesserter Verbindungsaufbau zu einer weiteren Übertragungseinheit gewährleistet ist.

Die Aufgabe wird in einem ersten Aspekt durch eine vorgenannte Übertragungseinheit gelöst, welche derart eingerichtet ist, dass der wenigstens eine Empfänger in Abhängigkeit von einer durch den Empfänger gemessenen Signalstärke auf die weitere Übertragungseinheit ausrichtbar ist.

Diese Lösung einer Übertragungseinheit hat den Vorteil, dass eine Ausrichtung der Übertragungseinheit auf eine weitere Übertragungseinheit effizienter, zeitsparender und gegebenenfalls ohne Kenntnis der Position der weiteren Übertragungseinheit durchgeführt werden kann. Dabei erfolgt eine Ausrichtung in Abhängigkeit der vom Empfänger gemessenen Signalstärke, sodass die Übertragungseinheit bestmöglich in Richtung des Maximums der empfangenen Lichtsignale ausgerichtet werden kann. Anschließend ist eine unidirektionale Datenübertragung von der weiteren Übertragungseinheit an den Empfänger der Übertragungseinheit möglich.

Bevorzugt weist die Übertragungseinheit zusätzlich wenigstens eine Sendediode zum Versenden von Daten auf. Dabei wird der Empfänger gemeinsam mit der Sendediode auf eine weitere Übertragungseinheit ausgerichtet, wodurch eine bidirektionale Datenübertragung zwischen den Übertragungseinheiten möglich ist.

Vorzugsweise ist die Übertragungseinheit derart eingerichtet, dass der Empfänger und gegebenenfalls die Sendediode automatisch auf die weitere Übertragungseinheit ausgerichtet werden. Das bedeutet, dass eine manuelle Justierung der Übertragungseinheit entfällt. Dies erlaubt gerade bei mangelnder Kenntnis über die Position einer weiteren Übertragungseinheit im Raum eine verbesserte und zeitsparende Ausrichtung der Übertragungseinheit.

Bevorzugt weist die Übertragungseinheit eine Anzeige zur Darstellung der durch den Empfänger gemessenen Signalstärke auf. Durch die Anzeige ist es einem Benutzer dennoch möglich, die Übertragungseinheit auch manuell in effizienter Weise auszurichten, da er eine Information über die Signalstärke im Raum erhält und die Übertragungseinheit in Richtung der maximalen Signalstärke ausrichten kann.

In einer ersten Ausführung sind der Empfänger und gegebenenfalls die Sendediode um eine erste Drehachse und um wenigstens eine zur ersten Drehachse senkrechte, zweite Drehachse schwenkbar gelagert. Das heißt, dass die Übertragungseinheit in verschiedene Raumrichtungen ausrichtbar ist und auf die Position einer weiteren Übertragungseinheit variabel eingestellt werden kann.

In einer zweiten möglichen Ausführungsform weist die Übertragungseinheit einen flexiblen Schwanenhals auf, an dessen einem Ende die Datenschnittstelle zum Anschluss an das Computersystem angeordnet ist und an dessen anderem distalen Ende der Empfänger sowie gegebenenfalls die Sendediode angeordnet sind. Dabei ist denkbar, dass die Übertragungseinheit abnehmbar oder fest an dem Computersystem, beispielsweise an einem Monitor, angeordnet ist. Auch durch diesen Schwanenhals-Aufbau ist es einem Benutzer möglich, die Übertragungseinheit mit der Sendediode und dem Empfänger optimal in jede Raumrichtung auszurichten.

In einem zweiten Aspekt wird die Aufgabe durch ein Verfahren der vorgenannten Art dadurch gelöst, dass sich die Übertragungseinheit mit einem Empfänger und gegebenenfalls einer Sendediode automatisch zu einer weiteren Übertragungseinheit ausrichtet, falls eine Verbindung zur weiteren Übertragungseinheit hergestellt oder aufrechterhalten werden soll. Möchte sich ein Benutzer beispielsweise mit seinem tragbaren Computer in das optische Datennetzwerk einwählen, so detektiert die Übertragungseinheit, welche am tragbaren Computer angeschlossen ist, vor dem Herstellen der Verbindung automatisch die Position einer weiteren Übertragungseinheit, welche beispielsweise in Form einer LED und eines Phototransistors in der Deckenbeleuchtung eines Büroraums integriert ist. Es ist auch denkbar, dass die Übertragungseinheit ihre Position zur weiteren Übertragungseinheit korrigiert, falls ihre Position zum Beispiel durch Verschieben des Computers verändert wurde. So ist gewährleistet, dass eine bestehende Datenverbindung bestmöglich aufrechterhalten bleibt.

Vorzugsweise misst der Empfänger der Übertragungseinheit eine Signalstärke. So ist beispielsweise denkbar, dass eine in der Deckenbeleuchtung integrierte weitere Übertragungseinheit als Access Point fungiert und aufgrund der eingeschalteten Beleuchtung dauerhaft modulierte Lichtsignale in den Raum abgibt. Der Empfänger der Übertragungseinheit, welche an den tragbaren Computer des Benutzers angeschlossen ist, kann somit in verschiedenen Raumrichtungen eine Signalstärke erfassen.

Zunächst misst die Übertragungseinheit durch den Empfänger vorzugsweise die Signalstärke in mehreren vorbestimmten Raumrichtungen und nimmt anschließend diejenige Winkelposition ein, an der die größte Signalstärke gemessen wurde. Durch diese Rasterabtastung des Raumes richtet sich die Übertragungseinheit automatisch in diejenige Raumrichtung aus, aus der die bestmögliche Signalqualität gewonnen werden kann. Dies kann entweder die Richtung sein, aus der eine weitere Übertragungseinheit direkt sendet, es ist jedoch auch möglich, dass sich diese Raumrichtung aufgrund von reflektierten Lichtstrahlen ergibt.

Vorzugsweise erfasst die Übertragungseinheit durch den Empfänger die Änderung der Signalstärke in einer ersten Drehrichtung und in einer zur ersten Drehrichtung senkrechten zweiten Drehrichtung und korrigiert ihre Position in Abhängigkeit der Richtung des steilsten Anstiegs der Signalstärke. Somit führt die Übertragungseinheit ein Gradientenverfahren zur optimalen Detektion des Signalmaximums ausgehend von der anfangs eingenommenen Winkelposition entlang einer gerasterten Raumrichtung durch. Dieser Verfahrensschritt kann auch während einer bereits bestehenden Verbindung zur weiteren Übertragungseinheit durchgeführt werden. Dabei ist es möglich, dass die Übertragungseinheit des tragbaren Computers eines Benutzers beispielsweise nach Verstellen des tragbaren Computers im Raum entsprechend dem Signalmaximum nachgeführt wird. So ist auch bei bestehender Verbindung im optischen Datennetzwerk stets eine optimale Signalqualität zwischen den zwei Übertragungseinheiten gewährleistet.

Nach der ersten Ausrichtung der Übertragungseinheit in eine vorbestimmte Raumrichtung in Abhängigkeit des detektierten Signalmaximums oder als alternativer Schritt dazu ist es ebenfalls denkbar, dass die Übertragungseinheit zunächst einen Schwenk um eine erste Drehachse durchführt und anschließend diejenige Winkelposition relativ zur ersten Drehachse einnimmt, an der die größte Signalstärke gemessen wurde. Weiterhin führt die Übertragungseinheit vorzugsweise einen Schwenk um wenigstens eine zur ersten Drehachse senkrechte, zweite Drehachse durch und nimmt anschließend diejenige Winkelposition relativ zur zweiten Drehachse ein, an der die größte Signalstärke gemessen wurde. Neben der groben Abtastung des Raumes und dem vorgenannten Gradientverfahren stellt diese Alternative eine weitere Möglichkeit zur bestmöglichen Ausrichtung einer Übertragungseinheit auf eine weitere Übertragungseinheit im Raum dar.

Weitere Ausgestaltungen sind in den Unteransprüchen sowie in der Figurenbeschreibung offenbart.

Die Erfindung wird anhand mehrerer Figuren näher erläutert.

### Es zeigen:

- Figur 1: einen Teil eines Computersystems mit einer angeschlossenen Übertragungseinheit,
- Figur 2: eine Anordnung eines Teils eines Computersystems mit einer Übertragungseinheit und einer weiteren Übertragungseinheit,
- Figur 3: eine Anordnung eines Teils eines Computersystems mit einer zweiten Ausführung einer Übertragungseinheit und einer weiteren Übertragungseinheit,
- Figur 4a: eine schematisierte Darstellung einer Anordnung zweier Übertragungseinheiten in einem ersten Betriebszustand und
- Figur 4b: eine schematisierte Darstellung einer Anordnung zweier Übertragungseinheiten in einem zweiten Betriebszustand.

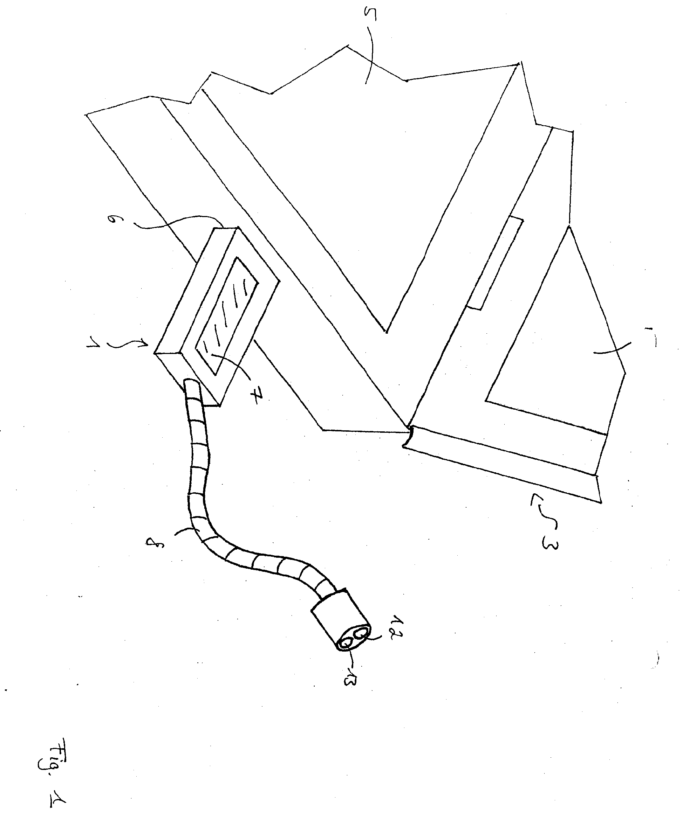

Figur 1 zeigt einen Teil eines tragbaren Computersystems 3 mit einem Display 4 und einer Tastatur 5. An das Computersystem 3 ist über eine Datenschnittstelle 6 eine Übertragungseinheit 1 zum Senden und Empfangen von Daten in einem optischen Datennetzwerk angeschlossen. Die Übertragungseinheit 1 weist in dieser Ausführungsform einen Schwanenhals 8 auf, an dessen einem Ende die Übertragungseinheit 1 in einem Grundkörper mit einer Anzeige 7 und der Datenschnittstelle 6 zum Anschluss an den Computer 3 mündet. Am anderen distalen Ende weist der Schwanenhals 8 eine Sende-/Empfangseinrichtung mit einer Sendediode 12 und einem Empfänger 13 auf. Aufgrund des flexiblen Schwanenhalses 8 kann die Sende-/Empfangseinrichtung beliebig in jegliche Raumrichtung ausgerichtet werden.

Über eine derartige Übertragungseinheit 1 kann der Computer 3 eine Datenverbindung zu einer weiteren Übertragungseinheit herstellen, wobei die Daten über moduliertes sichtbares Licht in einem optischen Datennetzwerk übertragen werden. Dabei dient die Sendediode 12 der Übertragungseinheit 1 zum Aussenden von modulierten hochfrequenten Lichtpulsen und der Empfänger 13 zum Empfang von hochfrequenten Lichtpulsen einer weiteren Übertragungseinheit. Gesendete beziehungsweise empfangene Daten werden über die Datenschnittstelle 6 an den Computer 3 weitergegeben. Diese Datenschnittstelle 6 kann beispielsweise dem USB-Standard (universal serial bus) entsprechen. Es ist aber auch jeglicher anderer Bus-Standard, beispielsweise eine eSATA-Schnittstelle (external serial advanced technology attachment), oder eine LAN-Schnittstelle (local area network) zur Datenübertragung an den Computer 3 denkbar.

Der Empfänger 13 der Übertragungseinheit 1 weist beispielsweise eine Photodiode oder einen Phototransistor zur Detektion der Lichtsignalstärke in der Umgebung auf, sodass modulierte Lichtsignale einer weiteren Übertragungseinheit im Raum erfasst werden können. Die empfangenen Signale werden in elektrische Signale umgewandelt und gegebenenfalls durch weitere Maßnahmen der Signalverarbeitung, beispielsweise eine Rauschunterdrückung oder eine frequenzabhängige Verstärkung der Signalamplitude, verarbeitet, wobei die resultierende Signalstärke an der Anzeige 7 der Übertragungseinheit 1 dargestellt werden kann. Die Anzeige 7 kann beispielsweise mehrere Leuchtdioden zur Balkendarstellung der Signalqualität aufweisen. Es ist auch eine digitale Anzeige denkbar, die unter anderem der Darstellung weiterer Informationen, wie zum Beispiel der Sendeleistung oder von Parametern des Datennetzwerks, dient.

Über die Anzeige 7 ist es einem Benutzer möglich, die über den Empfänger 13 erfasste Signalstärke im Raum zu überwachen, während er die Übertragungseinheit 1 am Schwanenhals 8 im Raum ausrichtet bis die dargestellte Signalstärke schließlich ein Maximum erreicht. Dies gewährleistet eine bestmögliche Signalqualität zum Herstellen einer optischen Datenverbindung zu einer weiteren Übertragungseinheit im Raum. Das erfasste Signalmaximum muss dabei nicht zwangsläufig das Hauptmaximum der von der weiteren Übertragungseinheit ausgestrahlten Lichtintensität sein. Es ist auch möglich, dass ein oder mehrere Nebenmaxima der Signalstärke gefunden werden, welche aufgrund von Reflexionen im Raum ebenfalls eine hohe Signalqualität gewährleisten. Nach Ausrichten der Sendediode 12 und des Empfängers 13 kann der Computer 3 Daten in Form von modulierten Lichtpulsen über die Licht emittierende Sendediode 12 an eine weitere Übertragungseinheit versenden und von dieser Lichtpulse über den Empfänger 13 erfassen und als empfangene Daten aufbereiten und weiterverarbeiten. Wird der Computer 3 in seiner Position verändert, so kann die Signaländerung an der Anzeige 7 mitverfolgt und die Sendediode 12 sowie der Empfänger 13 gegebenenfalls über den Schwanenhals 8 nachjustiert werden.

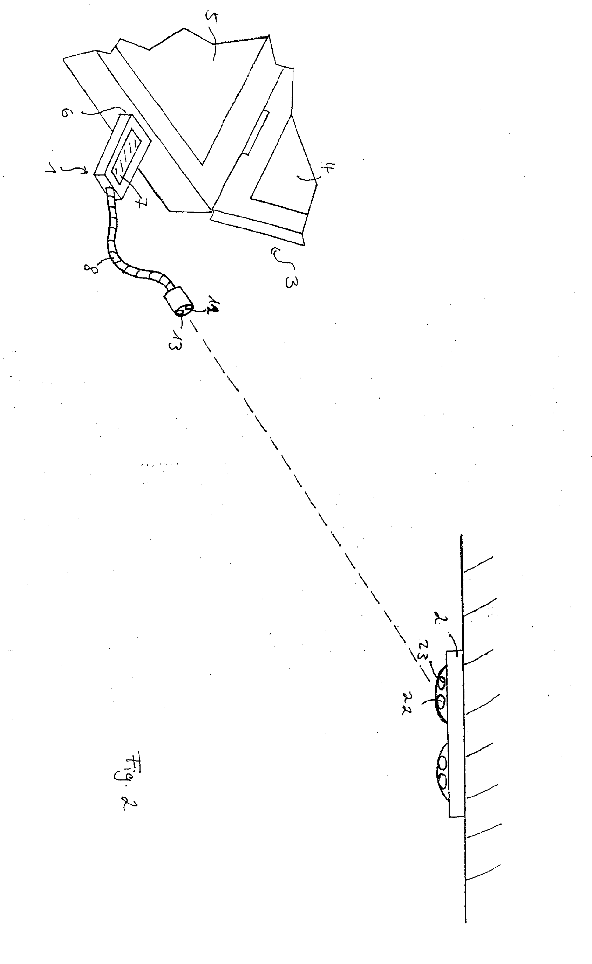

Figur 2 zeigt eine Anordnung eines Teils eines Computers 3 mit einer Übertragungseinheit 1 gemäß Figur 1 und einer weiteren Übertragungseinheit 2, welche beispielsweise an einer Wand oder Decke in einem Büroraum montiert sein kann. Die Übertragungseinheit 1 ist mit ihrer Sendediode 12 und ihrem Empfänger 13 mittels des Schwanenhalses 8 in Blickrichtung auf die Sendediode 22 und den Empfänger 23 der weiteren Übertragungseinheit 2 im Raum ausgerichtet. Die weitere Übertragungseinheit 2 kann beispielsweise in der Deckenbeleuchtung des Raums integriert sein, sodass bei eingeschalteter Raumbeleuchtung die Übertragungseinheit 2 fortwährend Lichtpulse aussendet. Diese Lichtpulse können vom Empfänger 13 der Übertragungseinheit 1 am Computer 3 empfangen werden und ihre Intensität nach Signalaufbereitung an der Anzeige 7 sichtbar gemacht werden.

Nach optimaler Ausrichtung der Übertragungseinheit 1 auf ein Maximum der ausgestrahlten Lichtsignale der weiteren Übertragungseinheit 2 ist eine optische Datenverbindung des Computers 3 über die Übertragungseinheit 1 zur weiteren Übertragungseinheit 2 möglich. Dabei sendet der Computer 3 Daten, welche über die Sendediode 12 der Übertragungseinheit 1 in modulierte Lichtsignale umgewandelt werden und an den Empfänger 23 der weiteren Übertragungseinheit 2 gesendet werden. Je nach verwendetem Übertragungsprotokoll kann die weitere Übertragungseinheit 2 parallel oder zeitlich versetzt nach Empfang der Daten über den Empfänger 23 selbst weitere Daten in Form von modulierten Lichtpulsen über ihre Sendediode 22 an den Empfänger 13 der Übertragungseinheit 1 übermitteln, wobei die empfangenen Daten dem Computer 3 über die Datenschnittstelle 6 mitgeteilt werden.

Der Schwanenhalsaufbau 8 der Übertragungseinheit 1 gewährleistet dabei in Verbindung mit der Anzeige 7 eine einfache und schnelle Ausrichtung der Sendediode 12 und des Empfängers 13 im Raum zum Herstellen einer Datenverbindung mit bestmöglicher Signalqualität.

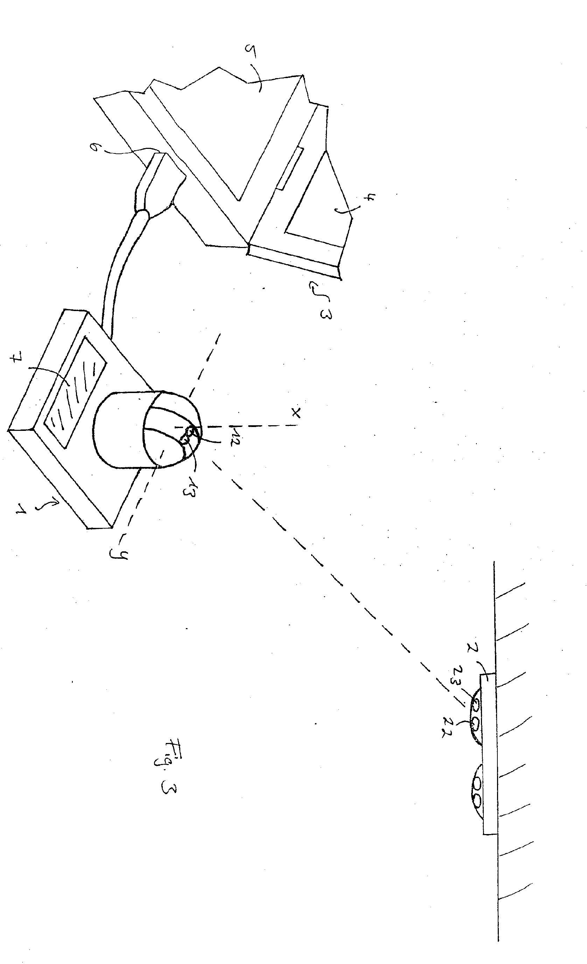

Figur 3 zeigt eine Anordnung eines Teils eines Computers 3 mit einer Übertragungseinheit 1 in einer zweiten Ausführungsform und einer weiteren Übertragungseinheit 2. Diese Ausführungsform einer Übertragungseinheit 1 ist ebenfalls über ein Datenkabel an eine Datenschnittstelle 6 des Computers 3 anschließbar. Im Unterschied zu den Ausführungsformen gemäß den Figuren 1 und 2 ist die Sendediode 12 und der Empfänger 13 der Übertragungseinheit 1 in dieser Ausführungsform um zwei Drehachsen X und Y schwenkbar gelagert. Gleichzeitig weist die Übertragungseinheit 1 auch eine Anzeige 7 zur Darstellung der Signalqualität und weiterer Verbindungsparameter auf. Ein Benutzer kann nun zum Ausrichten der Übertragungseinheit 1 auf die weitere Übertragungseinheit 2 die Sendediode 12 und den Empfänger 13 relativ zur Achse X und zur Achse Y schwenken, wobei die über den Empfänger 13 jeweils empfangene Signalstärke über die Anzeige 7 dargestellt wird. So kann der Benutzer die Sendediode 12 und den Empfänger 13 manuell derart ausrichten, dass ein Maximum der empfangenen Signalstärke im Raum erfasst wird und die Übertragungseinheit 1 daher zum Aufbau einer Datenverbindung zur weiteren Übertragungseinheit 2 bestmöglich ausgerichtet ist.

Ebenfalls ist bei dem in Figur 3 dargestellten Ausführungsbeispiel denkbar, dass sich die Übertragungseinheit 1 mit der Sendediode 12 und ihrem Empfänger 13 automatisch auf die weitere Übertragungseinheit 2 ausrichtet. Hierbei können verschiedene Verfahren zur Detektion der bestmöglichen Signalstärke Anwendung finden. Es ist beispielsweise denkbar, dass die Übertragungseinheit 1 zunächst die Signalstärke in mehreren vorbestimmten Raumrichtungen misst und sich anschließend auf diejenige Winkelposition ausrichtet, in der die maximale Signalstärke erfasst wurde. Parallel dazu oder im Anschluss an diesen Verfahrensschritt kann beispielsweise ein Gradientenverfahren angewendet werden, wobei die Position der Sendediode 12 und des Empfängers 13 um ein differentielles Stück relativ zu den Drehachsen X und Y verändert wird und die Position anschließend in Richtung des steilsten Anstiegs der Signalstärke korrigiert wird. Dadurch können die Sendediode 12 und der Empfänger 13 optimal auf ein Signalmaximum ausgerichtet werden. Schließlich baut die Übertragungseinheit 1 eine Verbindung zur weiteren Übertragungseinheit 2 auf, falls sie sich zu dieser ausgerichtet hat.

Es ist denkbar, dass ein derartiges Gradientenverfahren auch während einer hergestellten Verbindung zu einer weiteren Übertragungseinheit 2 kontinuierlich oder nach Ablauf einer vorbestimmten Zeitdauer durchgeführt wird, um die Übertragungseinheit 1 beispielsweise nach einer Positionsveränderung im Raum entsprechend dem Signalmaximum nachzuführen, sodass zu jedem Zeitpunkt eine bestmögliche Verbindungsqualität gewährleistet ist. Bei der automatischen Ausrichtung der Übertragungseinheit 1 wird eine Anzeige 7 nicht mehr direkt benötigt, kann aber zur Kontrolle durch den Benutzer optional vorhanden sein.

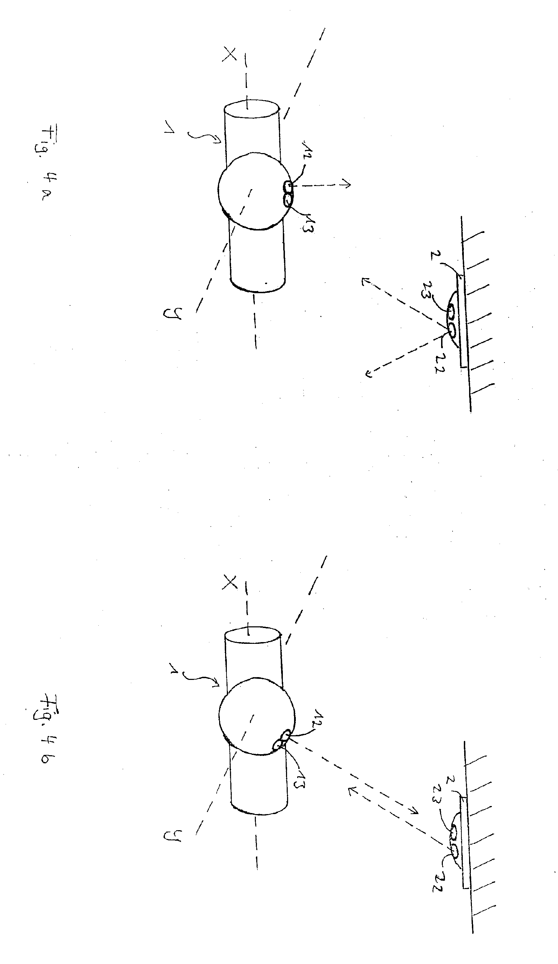

Figur 4a zeigt eine Anordnung einer Übertragungseinheit 1 mit einer weiteren Übertragungseinheit 2 in einem ersten Betriebszustand der Übertragungseinheit 1. Die weitere Übertragungseinheit 2 ist beispielsweise in der Deckenbeleuchtung eines Raums integriert und sendet kontinuierlich sichtbares Licht einer Sendediode 22 in einem bestimmten Abstrahlwinkel, welcher durch zwei gestrichelte Pfeile dargestellt ist, in den Raum. Die Übertragungseinheit 1 ist mit ihrer Sendediode 12 und ihrem Empfänger 13 um zwei Drehachsen X und Y schwenkbar gelagert. Im Betriebszustand gemäß Figur 4a sind die Sendediode 12 und der Empfänger 13 der Übertragungseinheit 1 senkrecht ausgerichtet, wobei ausgestrahlte Lichtpulse der Sendediode 12 in den Raum abgestrahlt werden und vom Empfänger 23 der weiteren Übertragungseinheit 2 lediglich mangelhaft detektiert werden können. In diesem Betriebszustand ist eine Datenverbindung nur mit einer sehr schlechten Signalqualität oder unter Umständen gar nicht möglich. Das bedeutet, dass sich die Übertragungseinheit 1 zur verbesserten Signalqualität auf die weitere Übertragungseinheit 2 ausrichten muss.

Figur 4b zeigt einen zweiten Betriebszustand der Übertragungseinheit 1 nach einer automatischen Ausrichtung der Sendediode 12 und des Empfängers 13 auf die weitere Übertragungseinheit 2. Hierbei wurden die Sendediode 12 und der Empfänger 13 relativ zu den Drehachsen X und Y derart geschwenkt, dass sie einen direkten Sichtkontakt mit der Sendediode 22 und dem Empfänger 23 der weiteren Übertragungseinheit 2 haben. Eine automatische Ausrichtung kann dabei über einen oder mehrere elektrische Antriebe erfolgen, welche die Übertragungseinheit 1 um die Drehachsen X und Y schwenken. Eine Maximumsuche erfolgt dabei gemäß den vorgenannten Verfahrensschritten. In Figur 4b kann eine Sendediode 12 der Übertragungseinheit 1 sichtbares Licht an einem Empfänger 23 aussenden; im Gegenzug erfasst der Empfänger 13 Lichtsignale, die von der Sendediode 22 ausgestrahlt wurden. Die automatische Ausrichtung der Übertragungseinheit 1 auf die weitere Übertragungseinheit 2 gewährleistet eine einfache und schnelle Detektion einer bestmöglichen Signalstärke zum Aufbau einer optischen Datenverbindung zwischen den zwei Übertragungseinheiten 1 und 2. Auch hier ist denkbar, dass die Sendediode 12 und der Empfänger 13 über ein Gradientenverfahren kontinuierlich oder nach Ablauf einer vorbestimmten Zeitdauer bei veränderter Position der Übertragungseinheit 1 im Raum mit dem Signalmaximum im Raum mitgeführt werden. Ebenso ist es denkbar, dass die Übertragungseinheit 1 nicht auf das Hauptmaximum, also den direkten Blickkontakt zur zweiten Übertragungseinheit 2, sondern auf ein Nebenmaximum, welches sich durch Reflexion im Raum ergibt, ausgerichtet wird.

In weiteren, nicht dargestellten Ausführungsformen kann eine Übertragungseinrichtung 1, ähnlich einer Webcam, in den Monitor eines tragbaren oder Desktop-Computersystems integriert sein. Eine Ausrichtung auf eine weitere Übertragungseinheit 2 im Raum kann dabei manuell oder automatisch erfolgen, wobei die Übertragungseinheit um beliebige Drehachsen im Raum geschwenkt werden kann. Die Drehachsen müssen dabei nicht zwangsläufig orthogonal zueinander angeordnet sein.

Ferner gibt eine Übertragungseinheit 1 in einer weiteren denkbaren Ausführung ein Warnsignal aus, falls die größte gemessene Signalstärke einen vorbestimmten Grenzwert unterschreitet. Alternativ oder in Kombination dazu kann die Übertragungseinheit 1 das beschriebene Verfahren zum Ausrichten auf die weitere Übertragungseinheit 2 wiederholen, falls die größte gemessene Signalstärke den vorbestimmten Grenzwert unterschreitet.

Die Ausrichtung und Abstrahlcharakteristik der beiden Übertragungseinheiten 1 und 2 kann gerichtet oder diffus aufgebaut sein. Im gerichteten Fall ist jedoch ein verminderter Energieaufwand zum Senden und Empfangen von Daten innerhalb des optischen Datennetzwerks nötig. Die offenbarte Erfindung erlaubt es, eine Übertragungseinheit schnell, einfach und energieeffizient im Raum auszurichten, sodass eine optimale Datenverbindung zu einer weiteren Übertragungseinheit im Raum sichergestellt ist. Dazu muss die exakte Position der weiteren Übertragungseinheit nicht bekannt sein.

Zum automatischen Ausrichten einer Übertragungseinheit 1 in Richtung eines erfassten Signalmaximums können jegliche Verfahren zur Maximumsuche, wie beispielsweise Gradientenverfahren, Newton-Verfahren sowie andere statische oder dynamische Optimierungsverfahren, eingesetzt werden.

## Patentansprüche

1. Übertragungseinheit (1) zur Übertragung von Daten in einem optischen Datennetzwerk, wobei die Daten kabellos über moduliertes sichtbares Licht einer Sendediode (12,22) an einen Empfänger (13,23) übertragbar sind und wobei die Übertragungseinheit (1) wenigstens einen Empfänger (13) zum Empfangen von Daten einer weiteren Übertragungseinheit (2) sowie eine Datenschnittstelle (6) zum Anschluss an ein Computersystem (3) aufweist,
**dadurch gekennzeichnet, dass**
die Übertragungseinheit (1) derart eingerichtet ist, dass der wenigstens eine Empfänger (13) in Abhängigkeit von einer durch den Empfänger (13) gemessenen Signalstärke auf die weitere Übertragungseinheit (2) ausgerichtet werden kann.

2. Übertragungseinheit (1) nach Anspruch 1,
**dadurch gekennzeichnet, dass** die Übertragungseinheit (1) zusätzlich wenigstens eine Sendediode (12) zum Versenden von Daten aufweist.

3. Übertragungseinheit (1) nach Anspruch 1 oder 2,
**dadurch gekennzeichnet, dass** die Übertragungseinheit (1) derart eingerichtet ist, dass der Empfänger (13) und gegebenenfalls die Sendediode (12) automatisch auf die weitere Übertragungseinheit (2) ausgerichtet werden.

4. Übertragungseinheit (1) nach einem der Ansprüche 1 bis 3, **dadurch gekennzeichnet, dass** die Übertragungseinheit (1) die gemessene Signalstärke an der Datenschnittstelle (6) bereitstellt.

5. Übertragungseinheit (1) nach einem der Ansprüche 1 bis 4, **dadurch gekennzeichnet, dass** die Übertragungseinheit (1) eine Anzeige (7) zur Darstellung der durch den Empfänger (13) gemessenen Signalstärke aufweist.

6. Übertragungseinheit (1) nach einem der Ansprüche 1 bis 5, **dadurch gekennzeichnet, dass** der Empfänger (13) und gegebenenfalls die Sendediode (12) um eine erste Drehachse (X) und um wenigstens eine zur ersten Drehachse (X) senkrechte, zweite Drehachse (Y) schwenkbar gelagert sind.

7. Übertragungseinheit (1) nach einem der Ansprüche 1, 2, 4 und 5, **dadurch gekennzeichnet, dass** die Übertragungseinheit (1) einen flexiblen Schwanenhals (8) aufweist, an dessen einem Ende die Datenschnittstelle (6) zum Anschluss an das Computersystem (3) angeordnet ist und an dessen anderem distalen Ende der Empfänger (13) sowie gegebenenfalls die Sendediode (12) angeordnet sind.

8. Verfahren zum Ausrichten einer Übertragungseinheit (1) zum Übertragen von Daten in einem optischen Datennetzwerk, wobei die Daten kabellos über moduliertes sichtbares Licht einer Sendediode (12,22) an einen Empfänger (13,23) übertragen werden,
**dadurch gekennzeichnet, dass**
sich die Übertragungseinheit (1) mit einem Empfänger (13) und gegebenenfalls mit einer Sendediode (12) automatisch zu einer weiteren Übertragungseinheit (2) ausrichtet, falls eine Verbindung zur weiteren Übertragungseinheit (2) hergestellt oder aufrechterhalten werden soll.

9. Verfahren nach Anspruch 8,
**dadurch gekennzeichnet, dass** der Empfänger (13) eine Signalstärke misst.

10. Verfahren nach Anspruch 9,
**dadurch gekennzeichnet, dass** die Übertragungseinheit (1) durch den Empfänger (13) die Signalstärke in mehreren vorbestimmten Raumrichtungen misst und anschließend diejenige Winkelposition einnimmt, an der die größte Signalstärke gemessen wurde.

11. Verfahren nach Anspruch 10,
**dadurch gekennzeichnet, dass** die Übertragungseinheit (1) durch den Empfänger (13) die Änderung der Signalstärke in einer ersten Drehrichtung und in einer zur ersten Drehrichtung senkrechten zweiten Drehrichtung erfasst und ihre Position in Abhängigkeit der Richtung des steilsten Anstiegs der Signalstärke korrigiert.

12. Verfahren nach Anspruch 9 oder 10,
**dadurch gekennzeichnet, dass** die Übertragungseinheit (1) einen Schwenk um eine erste Drehachse (X) durchführt und anschließend diejenige Winkelposition relativ zur ersten Drehachse (X) einnimmt, an der die größte Signalstärke gemessen wurde.

13. Verfahren nach Anspruch 12,
**dadurch gekennzeichnet, dass** die Übertragungseinheit (1) einen Schwenk um wenigstens eine zur ersten Drehachse (X) senkrechte, zweite Drehachse (Y) durchführt und anschließend diejenige Winkelposition relativ zur zweiten Drehachse (Y) einnimmt, an der die größte Signalstärke gemessen wurde.
